(19) Europäisches Patentamt
European Patent Office
Office européen des brevets

(11) **EP 2 778 611 B1**

(12) **EUROPÄISCHE PATENTSCHRIFT**

(45) Veröffentlichungstag und Bekanntmachung des Hinweises auf die Patenterteilung:
**20.04.2016 Patentblatt 2016/16**

(51) Int Cl.:
***G01C 19/72*** *(2006.01)*

(21) Anmeldenummer: **14000481.3**

(22) Anmeldetag: **11.02.2014**

(54) **Unterdrückung des Lock-In-Effekts aufgrund eines MIOC-Frequenzgangs beim faseroptischen Sagnac-Interferometer**

Suppression of the lock-in effect due to a MIOC frequency response in a fibre optic Sagnac interferometer

Suppression de l'effet Lock-in par la réponse en fréquence d'un MIOC dans un interféromètre à fibre optique de Sagnac

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2013 DE 102013004380**

(43) Veröffentlichungstag der Anmeldung:
**17.09.2014 Patentblatt 2014/38**

(73) Patentinhaber: **Northrop Grumman LITEF GmbH 79115 Freiburg (DE)**

(72) Erfinder:
• **Spahlinger, Günter 70188 Stuttgart (DE)**
• **Deppe-Reibold, Olaf 79312 Emmendingen (DE)**

(74) Vertreter: **Müller Hoffmann & Partner Patentanwälte mbB St.-Martin-Strasse 58 81541 München (DE)**

(56) Entgegenhaltungen:
US-A- 5 504 580    US-A1- 2009 201 510
US-A1- 2013 044 328

## EP 2 778 611 B1

**Beschreibung**

Die Erfindung betrifft einen Drehratensensor mit einem faseroptisches Sagnac-Interferometer sowie ein Verfahren zum Steuern eines Drehratensensors mit einem faseroptischen Sagnac-Interferometer.

Faseroptische Sagnac-Interferometer werden in Drehratensensoren in Inertialnavigationssystemen eingesetzt.

Inertiale Navigationssysteme sind auf vielfältige Weise realisierbar, wobei in der Regel ein Erfassen von auf ein Objekt wirkenden Kräften bzw. Beschleunigungen und die anliegenden Drehraten einer Positionsbestimmung zugrunde liegen. Anstelle von mechanischen Effekten können auch optische Effekte zur Bestimmung der Drehraten für Inertiale Navigationssysteme ausgenutzt werden. Ein derartiges Inertiales Navigationssystem kann auf wenigstens einem faseroptischen Sagnac-Interferometer basieren. Dieses nutzt den Sagnac-Effekt aus, gemäß dem bei einer Rotation einer optischen Lichtleiterschleife um ihre Normale ein optischer Wegunterschied zwischen zwei in der Lichtleiterschleife entgegengesetzt laufenden Lichtstrahlen auftritt. Bei der Beobachtung des aus der Lichtleiterschleife austretenden und überlagerten Lichts der beiden Lichtstrahlen wird während der Rotation eine Intensitätsänderung sichtbar, die durch eine Interferometerkennlinie beschrieben werden kann, die die Intensitätsänderung in Abhängigkeit der Phasendifferenz der beiden Lichtwellen beschreibt. Anders ausgedrückt ruft eine auf ein Sagnac-Interferometer einwirkende Drehbewegung eine Phasenverschiebung zwischen den beiden entgegengesetzt umlaufenden Lichtstrahlen hervor, so dass am Ort der Überlagerung beider Strahlen eine von der Drehbewegung abhängige Intensitätsänderung beobachtet werden kann.

Die Phasenverschiebung in einem faseroptischen Sagnac-Interferometer ist direkt proportional zu der Drehgeschwindigkeit, der Weglänge des Lichtwegs in der Lichtleiterschleife bzw. einer Lichtleiterspule und dem Durchmesser des kreisförmigen Lichtwegs. Die Phasenverschiebung verhält sich außerdem umgekehrt proportional zur Wellenlänge des eingesetzten Lichts.

Die oben bereits erwähnte Interferometerkennlinie, die die Abhängigkeit der Lichtintensität, die als Beobachtungsgröße zur Bestimmung der Rotation dienen soll, von der Phasendifferenz beschreibt, ist kosinusförmig.

Da eine entsprechende Transferfunktion im Maximum der Kosinus-Kurve unempfindlich gegenüber kleinen Eingangswerten ist und ein der Drehrichtung entsprechendes Vorzeichen der Phasenverschiebung nicht ermittelbar ist, wird häufig ein Arbeitspunkt des Sagnac-Interferometers derart eingestellt, dass er im Punkt einer maximalen Steigung der kosinusoiden Funktion liegt. Hierzu kommen beispielsweise Sinus- oder Rechteckmodulationen infrage. Somit soll bereits bei einer geringen Drehbewegung eine maximale Empfindlichkeit des Interferometers gewährleistet sein.

Ein Drehratensensor, der ein faseroptisches Sagnac-Interferometer enthält, weist meist einen Integrierten Optischen Multifunktions-Chip (multifunctional integrated optical chip, MIOC) auf, mithilfe dessen eine Phasenmodulation durchführbar ist. Der MIOC ist in der Regel Teil eines Regelkreises zum Einstellen der oben beschriebenen Phasenmodulation. Physikalische Effekte im MIOC, z. B. bewegliche Ladungsträger, verursachen eine Frequenzabhängigkeit der Phasenmodulation. Der MIOC weist also einen Frequenzgang auf, aufgrund dessen auf unterschiedliche Frequenzen unterschiedliche Frequenzantworten erfolgen. Da dieses Phänomen auch auf die Beweglichkeit der Ladungsträger im MIOC zurückgeht, liegt auch eine Abhängigkeit des MIOC-Frequenzgangs von der Umgebungstemperatur bzw. der Temperatur des MIOC selbst vor.

Dieser MIOC-Frequenzgang führt zu einer speziellen Form des Lock-in Effekts, der sich darin äußert, dass bei tatsächlichen geringen Drehraten um 0°/h eine Häufung von Ausgangssignalen auftritt, die einer Drehrate von 0°/h entsprechen. Die daraus hervorgehende Unempfindlichkeit eines Sagnac-Interferometers gegenüber sehr geringen Drehraten behindert freilich eine hochpräzise und zuverlässige Messung insbesondere bei sehr geringen Drehraten und unter nicht-konstanten Temperaturbedingungen.

US 2013/044328 A1 offenbart eine elektronische Vorrichtung mit geschlossener Schleife für einen faseroptischen Kreisel mit einem optischen Phasenmodulator, gekennzeichnet durch eine Übertragungsfunktion, welche eine Fehlerkomponente von wenigstens zweiter Ordnung umfasst. Die Vorrichtung umfasst: eine erste digitale Schaltung, die ein digitales Bias-Modulationssignal erzeugt; eine zweite digitale Schaltung, die ein digitales Rückkopplungssignal erzeugt; mindestens einen Digitalzu-Analog-Wandler, der ein elektrisches Signal erzeugt, das den Phasenmodulator aus dem digitalen Bias-Modulationssignal und dem digitalen Rückkopplungssignal steuert; und einen Kompensator, der ein Analogfilter von mindestens zweiter Ordnung und einen Digitalfilter von mindestens zweiter Ordnung enthält, wobei das analoge Filter und das digitale Filter das elektrische Signal vorfiltern, um die Fehlerkomponente zu kompensieren.

US 2009/201510 A1 offenbart, dass Bestimmen von linearer Modulator-Dynamik in einem interferometrischen faseroptischen Kreisel durch Anlegen eines Reizes an einem Punkt innerhalb des Kreisels, Beobachten einer Reaktion in einem Output des Kreisels und Bestimmen der linearen Modulator-Dynamik aus der beobachteten Reaktion erreicht werden kann.

Der Erfindung liegt die Aufgabe zugrunde, einen Drehratensensor mit einem faseroptischen Sagnac-Interferometer anzugeben, bei dem der durch den MIOC-Frequenzgang verursachte Lock-In-Effekt wirksam eingedämmt wird und bei dem selbst bei sehr geringen Drehraten und nicht-konstanten Temperaturbedingungen hochpräzise Drehratenmessungen durchführbar sind. Diese Aufgabe wird erfindungsgemäß durch den Gegenstand gemäß den unabhängigen Patentansprüchen gelöst. Weitere Ausführungsformen der Erfindung sind in den jeweiligen Unteransprüchen angegeben.

Ein erfindungsgemäßes faseroptisches Sagnac-Interferometer in einem Drehratensensor weist eine Lichtquelle, einen Polarisator, eine Faserspule, eine Photodetektoreinrichtung, einen Verstärker mit einem nachgeschalteten Analog/Digital-Wandler, einen Digital/Analog-Wandler, eine Auswerteschaltung, einen Addierer und einen Phasenmodulator auf. Synonym für das faseroptische Sagnac-Interferometer ist beispielsweise eine faseroptische Ringinterferometer-Anordnung. Dabei ist die Lichtquelle vorzugsweise dazu in der Lage, Licht mit einer bestimmbaren Wellenlänge auszustrahlen. Wie oben bereits angedeutet und im Folgenden noch genauer erläutert wird, sollen geringfügige Phasenverschiebungen ermittelt werden. In der Regel wird eine sogenannte Superlumineszenz-Diode (SLD) als Lichtquelle eingesetzt, da diese eine höhere optische Bandbreite als eine Laserlichtquelle und dementsprechend eine kürzere Kohärenzlänge aufweist. Der Vorteil einer geringen Kohärenzlänge (typischerweise 25 $\mu$m) ist die Inkohärenz zwischen dem Nutzsignal und weiteren Lichtsignalen, die z. B. an Reflexions- oder Streustellen entstehen.

Der Polarisator ist dazu geeignet, das Licht der Lichtquelle zu polarisieren. Die Faserspule entspricht einer oben genannten Lichtleiterspule und besteht im Wesentlichen aus einer zu einer Spule aufgewickelten optischen Faser. Die optische Faser kann beispielsweise eine mikrostrukturierte Faser oder ein Verbund aus mikrostrukturierten Fasern sein, so dass die optische Faser vollständig oder nur teilweise aus einem Licht leitenden Material besteht. Die Photodetektoreinrichtung ist dazu geeignet, darauf auftreffendes Licht in elektrische Signale zu wandeln, die zunächst eine eine Information über eine Lichtintensität enthalten, aus der ggf. Information über die Wellenlänge, eine Interferenz bzw. ein Interferenzsignal oder eine Phasenverschiebung abgeleitet werden kann. Der Phasenmodulator ist z. B. im MIOC, also vor der Faserspule angeordnet und dazu geeignet, eine Phase eines Lichtstrahls zu modulieren.

Zwei aus der Lichtquelle stammende, durch den Polarisator polarisierte und durch eine Strahlteilung erzeugte Lichtstrahlen sind in zueinander entgegen gesetzten Richtungen in die Faserspule einstrahlbar und anschließend wiedervereinigbar. Hierzu können etwa Anordnungen mit Spiegeln bzw. Halbspiegeln eingesetzt werden, so dass ein Lichtstrahl aus der Lichtquelle austritt, dieser aufgeteilt wird und folglich zwei aus der Lichtquelle stammende Lichtstrahlen vorliegen, die wiederum zueinander entgegengesetzt in die Faserspule eingestrahlt werden. In der Regel wird der ganze Aufbau und dabei insbesondere die Strahlteilung und - vereinigung sowie die Phasenmodulation aber mit integriert optischen Komponenten realisiert. Die beiden aus der Lichtquelle stammenden Lichtstrahlen sind mittels des in der Faserspule angeordneten Phasenmodulators modulierbar. Mithilfe des Phasenmodulators kann also die Phase eines Lichtstrahls oder beider Lichtstrahlen verändert werden, was einer Phasenverschiebung der beiden Lichtstrahlen zueinander entspricht.

Die Photodetektoreinrichtung ist mit dem aus der Wiedervereinigung der Lichtstrahlen entstehenden Interferenzsignal beaufschlagbar, wobei durch die Photodetektoreinrichtung ein der Lichtintensität des Interferenzsignals entsprechendes Signal lieferbar ist. Mit diesem Signal ist der Verstärker mit dem nachgeschalteten Analog/Digital-Wandler beaufschlagbar. Die Ausgangssignale des Analog/DigitalWandlers sind in der Auswerteschaltung verarbeitbar.

Mithilfe eines Hauptregelkreises der Auswerteschaltung ist ein digitales Phasenrückstellsignal erzeugbar und an den Digital/Analog-Wandler zur Gewinnung eines den Phasenmodulator beaufschlagenden Rückstellsignals lieferbar. Der Regelkreis weist dabei einen Integrierten Optischen Multifunktions-Chip (multifunctional integrated optical chip, MIOC) mit einer ihm eigenen Übertragungsfunktion auf, die entsprechend MIOC-Übertragungsfunktion genannt wird. Ein derartiger Integrierter Optischer Multifunktions-Chip wurde oben bereits beschrieben und ist, wie auch seine Funktion zur Regelung der Phasenmodulation, an sich bereits bekannt. Ein MIOC ist meist als abgeschlossenes Bauteil ausgeführt, das einen optischen Eingang und zwei optische Ausgänge aufweist. Eine Strahlteilung eines Lichtstrahls und ein Zusammensetzen der entstehenden Strahlen wird also in dem MIOC vorgenommen.

An wenigstens einem der beiden Teilstrahlen kann eine Phasenmodulation bewirkt werden, indem etwa mithilfe von Elektroden eine Modulation bezüglich des darin geführten Lichts ausübbar ist. Dabei kann durch ein mit Hilfe der Elektroden appliziertes elektrisches Feld der effektive Index bzw. die Fähigkeit zum Leiten von Licht beeinflusst werden. Somit ist der Phasenmodulator also quasi ein Bestandteil des MIOC oder anders ausgedrückt durch den MIOC realisiert. Der MIOC stellt also einen wesentlichen Bestandteil eines Faserkreisels und folglich des gesamten faseroptischen Sagnac-Interferometers dar. Freie Ladungsträger beeinflussen dabei die Übertragungsfunktion des MIOCs derart, dass ein Hochpassverhalten entsteht und damit bei höheren Modulationsfrequenzen auch ein höherer Phasenhub erzeugt wird. Dieses Verhalten führt, wie bereits oben erwähnt, zu einer speziellen Form des Lock-in Effekts.

Wie beschrieben, kann eine Phasenverschiebung der beiden Lichtstrahlen zueinander in der Faserspule durch den Phasenmodulator im MIOC vorgenommen werden. Typischer Weise ist es gewünscht, dass der Phasenmodulator die Phasenverschiebung der beiden Lichtstrahlen so einstellt, dass der Arbeitspunkt auf der kosinusförmigen Interferometerkennlinie immer bei halber Maximalintensität liegt und damit in einem Punkt maximaler Steigung dieser Kennlinie. Um eine entsprechende Phasenverschiebung auch bei einer Drehbewegung des Interferometers stets einzustellen, wird das Rückstellsignal zum Beaufschlagen des Phasenmodulators erzeugt. Dieses Rückstellsignal gibt gleichzeitig auch den Grad einer Drehbewegung an und wird wiederum auf Grundlage des Signals der Photodetektoreinrichtung erzeugt, mit welchem der Verstärker mit nachgeschaltetem Analog/Digital-Wandler beaufschlagbar ist.

Zum besseren allgemeinen Verständnis wird die oben dargelegte Technologie im Folgenden nochmals auf andere Weise erläutert. Alle Lichtstrahlen bzw. Lichtsignale innerhalb der Faserspule liegen in einer analogen Domäne vor. Eine Handhabung etwa von Modulationssignalen und Signalen der Photodetektoreinrichtung bzw. des Hauptregelkreises überhaupt erfolgt in der Auswerteschaltung in einer digitalen Domäne. Zum Erlangen des für die Phasenmodulation maßgeblichen Rückstellsignals wird in der Auswerteschaltung ein Modulationssignal erzeugt. Dieses Modulationssignal steuert nach einer Umwandlung durch den Digital/Analog-Wandler als das Rückstellsignal den Phasenmodulator und damit vereinfacht ausgedrückt "den Kreisel" an. Ebenfalls vereinfacht ausgedrückt durchläuft das Rückstellsignal als Ausgangssignal des Digital/Analog-Wandlers in analogisierter Form die analoge Domäne der Interferometeranordnung oder den Kreiselpfad und gelangt daraufhin als ein der empfangenen Lichtintensität der Vereinigung der beiden Lichtstrahlen proportionales Signal zum Eingang eines Demodulators.

Bei einem erfindungsgemäßen faseroptischen Sagnac-Interferometer in einem Drehratensensor ist dem Integrierten Optischen Multifunktions-Chip ein Digitalfilter vorgeschaltet, dessen Filter-Übertragungsfunktion im Wesentlichen der inversen MIOC-Übertragungsfunktion entspricht, sodass die MIOC-Übertragungsfunktion durch die Filter-Übertragungsfunktion kompensierbar ist. Die charakteristische MIOC-Übertragungsfunktion, in der sich die oben dargestellte Frequenz- bzw. Temperaturabhängigkeit niederschlägt, kann dazu beispielsweise gemessen oder anhand von Simulationen oder Erfahrungswerten bestimmt oder etwa bei Kenntnis der exakten MIOC-Übertragungsfunktion berechnet werden. Somit ist jedenfalls eine im Wesentlichen inverse MIOC-Übertragungsfunktion als die Filter-Übertragungsfunktion des Digitalfilters erhaltbar. Da stets geringfügige Abweichungen oder Ungenauigkeiten bei entsprechenden Simulationen oder Messungen auftreten können, wird hier von einer jedenfalls im Wesentlichen inversen MIOC-Übertragungsfunktion gesprochen. Idealer Weise soll jedoch möglichst eine tatsächlich inverse MIOC-Übertragungsfunktion als Filter-Übertragungsfunktion berechnet werden. Ist die MIOC-Übertragungsfunktion etwa durch H*(z) bestimmt, wobei T die Abtastzeit angibt und

$$z = e^{j_\omega T}$$

gilt, so ist die Filter-Übertragungsfunktion

$$H(z) = 1 / H^*(z).$$

Hierbei stellt $\omega$ den Bezug zur Kreisfrequenz in der z-Transformation her.

Die Frequenzantwort des MIOC wirkt sich auf die analoge Domäne aus, denn sie betrifft die analoge Modulation im Faserkreisel. Das dem MIOC vorgeschaltete Digitalfilter ist - wie dessen Name bereits nahe legt - vor dem Digital/AnalogWandler angeordnet und wirkt primär in der digitalen Domäne. Die Signalverarbeitung in der digitalen Domäne wird durch das Digitalfilter beeinflusst, indem die zu der MIOC-Übertragungsfunktion umgekehrte Filter-Übertragungsfunktion in sie einfließt. Das umgekehrte Abbild der MIOC-Übertragungsfunktion in der analogen Domäne geht also durch das Digitalfilter in der digitalen Domäne in die Signalverarbeitung ein. Genauer gesagt wird das den Phasenmodulator beaufschlagende Rückstellsignal und Modulationssignal auf Grundlage des Ausgangssignals des Digitalfilters erzeugt. Dies kompensiert die Frequenz- bzw. Temperaturabhängigkeit des MIOC, die sich jeweils in der MIOC-Übertragungsfunktion niederschlägt.

Die Filter-Übertragungsfunktion ist in der Praxis meist durch entsprechende Koeffizienten beschreibbar, die eine entsprechende Frequenzantwort auf ein Eingangssignal bzw. eine Ausgangsfunktion definieren. Ein faseroptisches Sagnac-Interferometer gemäß einer weiteren Ausführungsform weist eine Einstelleinheit zum Einstellen von Koeffizienten der Filter-Übertragungsfunktion sowie eine Koeffizienten-Berechnungseinheit zum Bereitstellen der Koeffizienten an die Einstelleinheit auf. Die MIOC-Übertragungsfunktion kann etwa durch eine Funktion $H^*(z, a_0, a_1)$ beschrieben sein und Koeffizienten $a_0$ und $a_1$ aufweisen, wobei gilt, dass

$$z = e^{j_\omega T}.$$

Demnach ergibt sich die dazu inverse Filter-Übertragungsfunktion zu

$$H(z, a_0, a_1) = 1 / H^*(z, a_0, a_1),$$

wobei gilt:

$$H(z, a_0, a_1) \bullet H^*(z, a_0, a_1) = 1$$

Konkret kann H*(z) beispielsweise in guter Näherung folgendermaßen beschreibbar sein:

$$H^*(z) = \frac{(1 + a_1 z^{-1})}{(1 + a_0 z^{-1})};$$

so dass also gilt:

$$H(z) = \left[H^*(z)\right]^{-1} = \frac{(1 + a_0 z^{-1})}{(1 + a_1 z^{-1})}$$

Gemäß einer weiteren Ausführungsform sind die Koeffizienten durch die Koeffizienten-Berechnungseinheit auf der Grundlage von Ausgangssignalen des Integrierten Optischen Multifunktions-Chips berechenbar. Ausgangssignale des MIOC, dessen Frequenz- bzw. Temperaturverhalten kompensiert werden soll, sind also verwendbar, um daraus entsprechende Koeffizienten der Filter-Übertragungsfunktion zu bestimmen. Die Koeffizienten-Berechnungseinheit berechnet die Koeffizienten auf der Grundlage der Ausgangssignale des MIOC und stellt sie anschließend an die Einstelleinheit bereit. In diesem Fall handelt es sich um ein adaptives digitales Filter.

Bei einem faseroptischen Sagnac-Interferometer gemäß einer weiteren Ausführungsform liegen in der Koeffizienten-Berechnungseinheit die Koeffizienten der Filter-Übertragungsfunktion bereits als zuvor festgelegte Werte vor. Die entsprechenden zuvor festgelegten Werte können dabei etwa auf Simulationen oder Erfahrungswerten bzw. bereits vor einem Betrieb des Sagnac-Interferometers mit dem MIOC bestimmten Messgrößen etwa aufgrund von Ausgangssignalen des MI-OC beruhen, die in der Koeffizienten-Berechnungseinheit abgespeichert werden. Eine Anpassung der zuvor festgelegten Koeffizienten im Laufe des Betriebs des faseroptischen Sagnac-Interferometer nach den oben dargelegten Möglichkeiten kann zudem vorgesehen sein.

Gemäß einer weiteren Ausführungsform eines faseroptischen Sagnac-Interferometers werden mithilfe der Koeffizienten-Berechnungseinheit die Koeffizienten der Filter-Übertragungsfunktion auf Grundlage des demodulierten Signals, das als Eingang des Hauptreglers dient und aus dem dieser das Rückstellsignal berechnet, ermittelt. In dem Rückstellsignal spiegelt sich naturgemäß der MIOC-Frequenzgang bzw. spiegeln sich die MIOC-Koeffizienten wieder. Die sich also im demodulierten Signal entsprechend niederschlagenden MIOC-Koeffizienten können wiedergewonnen werden und zur Bestimmung der Filter-Koeffizienten des Digitalfilters verwendet werden.

Gemäß einer weiteren Ausführungsform eines faseroptischen Sagnac-Interferometers sind mithilfe der Koeffizienten-Berechnungseinheit ein erstes und ein zweites Phasenmodulationssignal erzeugbar. Das erste Phasenmodulationssignal ist dabei aus dem Phasenrückstellsignal erzeugbar, wobei das Digitalfilter und der MIOC keine Auswirkung auf das Phasenrückstellsignal haben. Das zweite Phasenmodulationssignal ist ebenfalls aus dem Phasenrückstellsignal erzeugbar, wobei das Digitalfilter und der MIOC eine Auswirkung auf das Phasenrückstellsignal haben. Außerdem ist mithilfe der Koeffizienten-Berechnungseinheit ein Phasenmodulations-Fehlersignal als Differenz zwischen dem ersten und dem zweiten Phasenmodulationssignal berechenbar. Die Koeffizienten der Filter-Übertragungsfunktion sind schließlich - ebenfalls durch die Koeffizienten-Berechnungseinheit - aufgrund des Phasenmodulations-Fehlersignals berechenbar.

Bei einem erfindungsgemäßen Verfahren zum Steuern eines faseroptischen Sagnac-Interferometers in einem Drehratensensor weist das Sagnac-Interferometer eine Lichtquelle, einen Polarisator, eine Faserspule, eine Photodetektoreinrichtung, einen Verstärker mit einem nachgeschalteten Analog/ DigitalWandler, einen Digital/Analog-Wandler, einen Phasenmodulator und eine Auswerteschaltung auf. Diese Komponenten sind bereits oben beschrieben und entsprechen sich.

Zwei aus der Lichtquelle stammende, durch den Polarisator polarisierte und durch eine Strahlteilung erzeugte Lichtstrahlen werden in zueinander entgegengesetzten Richtungen in die Faserspule eingestrahlt und anschließend wiedervereinigt. Außerdem wird die Photodetektoreinrichtung mit dem aus der Wiedervereinigung der Lichtstrahlen entstehenden Interferenzsignal nach Durchlauf durch den Polarisator beaufschlagt, wobei durch die Photodetektoreinrichtung ein der Lichtintensität des Interferenzsignals entsprechendes Signal geliefert wird, mit dem der Verstärker mit dem nachgeschalteten Analog/Digital-Wandler beaufschlagt wird, dessen Ausgangssignale in der Auswerteschaltung verarbeitet werden. Mithilfe eines Hauptregelkreises der Auswerteschaltung wird ein digitales Phasenrückstellsignal erzeugt und an den Digital/Analog-Wandler zur Gewinnung eines den Phasenmodulator beaufschlagenden Rückstellsignals geliefert, wobei der Regelkreis einen Integrierten Optischen Multifunktions-Chip (MIOC) mit einer MIOC-Übertragungsfunktion aufweist. Auch dies wurde bereits oben genauer erläutert.

Gemäß dem Verfahren wird dem Integrierten Optischen Multifunktions-Chip (MIOC) ein Digitalfilter vorgeschaltet, wobei die Filter-Übertragungsfunktion des Digitalfilters im Wesentlichen der inversen MIOC-Übertragungsfunktion entspricht. Ferner wird die MIOC-Übertragungsfunktion durch die Filter-Übertragungsfunktion kompensiert.

Gemäß einer Ausführungsform des Verfahrens, werden das Digitalfilter und der MIOC umgangen und ein erstes Phasenmodulationssignal wird auf Grundlage des Phasenrückstellsignals erzeugt. Ferner werden das Digitalfilter und der MIOC wieder einbezogen und ein zweites Phasenmodulationssignal wird auf Grundlage des Phasenrückstellsignals erzeugt. Dann wird ein Phasenmodulations-Fehlersignal als Differenz zwischen dem ersten und dem zweiten Phasenmodulationssignal errechnet. Koeffizienten der Filter-Übertragungsfunktion des Digitalfilters werden dann auf Grundlage des Phasenmodulations-Fehlersignals bestimmt und die bestimmten Koeffizienten werden als die Koeffizienten der Filter-Übertragungsfunktion eingestellt. Anders ausgedrückt werden die bestimmten Koeffizienten so eingestellt, dass sie eine zur MIOC-Übertragungsfunktion reziproke Filter-Übertragungsfunktion definieren.

Die oben beschriebenen sowie weitere Vorteile und Merkmale der Erfindung werden nachfolgend anhand von Beispielen unter Zuhilfenahme der begleitenden Figur näher erläutert. Hierbei zeigen:

Fig. 1       ein in skizzierter Form dargestelltes faseroptisches Sagnac-Interferometer gemäß einer Ausführungsform der Erfindung;

Fig. 2       ein in skizzierter Form dargestelltes faseroptisches Sagnac-Interferometer gemäß einer weiteren Ausführungsform der Erfindung; und

Fig. 3A bis 3C       in skizzierter Form dargestellte Blockdiagramme zur Abbildung von Übertragungsfunktionen.

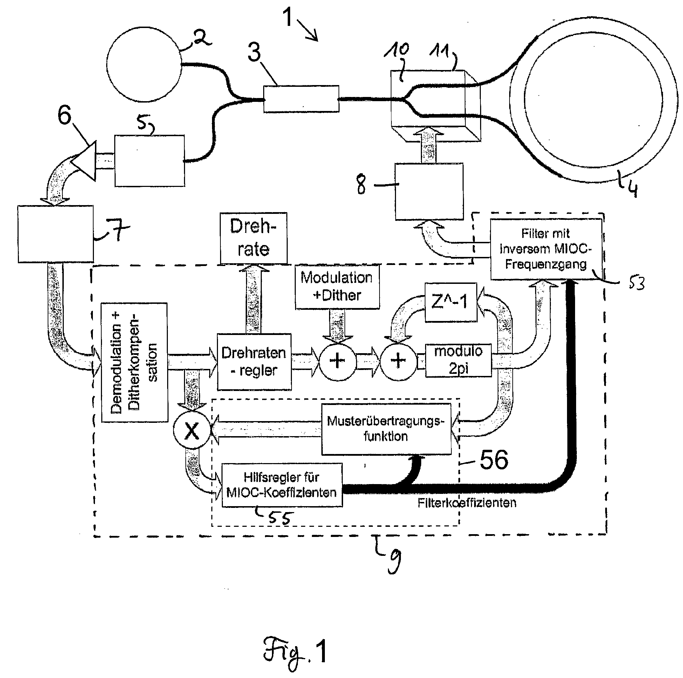

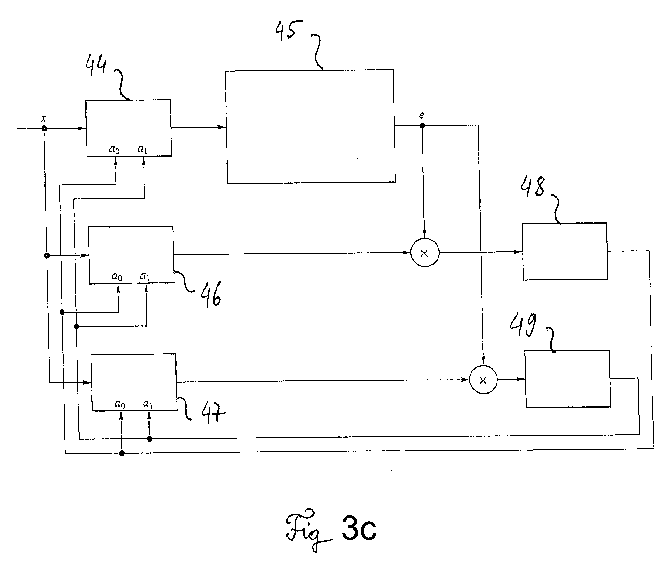

In Fig. 1 ist in skizzierter Form ein weiteres beispielhaftes faseroptisches Sagnac-Interferometer 1 gemäß der Erfindung dargestellt, das oben bereits beschriebene Bestandteile aufweist. Insbesondere sind eine Lichtquelle 2, ein Polarisator (beispielsweise im Integrierten Optischen Multifunktions-Chip 11 integriert), ein faseroptischer Koppler 3, eine Faserspule 4, eine Photodetektoreinrichtung 5, ein Verstärker 6 mit einem nachgeschalteten Analog/Digital-Wandler 7, ein Digital/Analog-Wandler 8, eine Auswerteschaltung 9 und ein Phasenmodulator 10 eines Integrierten Optischen Multifunktions-Chip (MIOC) 11 mit einem entsprechenden vorgeschalteten Filter 53 bereitgestellt. Dieses Interferometer weist eine adaptive Filterfunktion auf, wobei mithilfe eines Hilfsreglers für MIOC-Koeffizienten 55 Filterkoeffizienten bzw. deren Werte an das Filter 53 übermittelt werden. Diese Koeffizienten werden durch den in Fig. 3C gezeigten Regelkreis in Übereinstimmung mit den oben gemachten Ausführungen bestimmt. Der Hilfsregler für MIOC-Koeffizienten 55 und eine Musterübertragungsfunktion können z. B. in Form eines Prozessors 56 ausgestaltet sein.

Die Lichtquelle 2 ist dazu geeignet, Licht mit einer bestimmbaren Wellenlänge auszustrahlen. Der Polarisator ist dazu geeignet, das Licht der Lichtquelle zu polarisieren. Die Faserspule 4 besteht im Wesentlichen aus einer zu einer Spule aufgewickelten optischen Faser. Die Photodetektoreinrichtung 5 ist dazu geeignet, darauf auftreffendes Licht in elektrische Signale zu wandeln, sodass diese beispielsweise eine Information über eine Lichtintensität, eine Wellenlänge, eine Interferenz bzw. ein Interferenzbild oder eine Phasenverschiebung enthalten.

Der Phasenmodulator 10 ist dazu geeignet, eine Phase eines Lichtstrahls zu modulieren. Mithilfe des Phasenmodulators 10 kann also die Phase eines der beiden Lichtstrahlen oder beider Lichtstrahlen verändert werden, was einer Phasenverschiebung der beiden Lichtstrahlen zueinander entspricht.

Die Photodetektoreinrichtung 5 ist mit dem aus der Wiedervereinigung der Lichtstrahlen entstehenden Interferenzsignal beaufschlagbar, wobei durch die Photodetektoreinrichtung 5 ein der Lichtintensität des Interferenzsignals entsprechendes Signal lieferbar ist. Mit diesem Signal ist der Verstärker 6 mit dem nachgeschalteten Analog/Digital-Wandler 7 beaufschlagbar. Die Ausgangssignale des Analog/Digital-Wandlers 7 sind in der Auswerteschaltung 9 verarbeitbar.

Mithilfe der Auswerteschaltung 9 ist ein digitales Phasenrückstellsignal erzeugbar und an den Digital/Analog-Wandler 8 zur Gewinnung eines den Phasenmodulator 10 beaufschlagenden Rückstellsignals lieferbar. Der Integrierte Optische Multifunktions-Chip (multifunctional integrated optical chip, MIOC) 11 weist eine ihm eigene Übertragungsfunktion auf, die MIOC-Übertragungsfunktion. Genauer gesagt ist in Fig. 1 der Integrierte Optische Multifunktions-Chip 11 nicht in Form seiner räumlichen Ausprägung oder Anordnung, sondern modellhaft dargestellt. Dem MIOC 11 ist das Digitalfilter 53 vorgeschaltet, dessen Filter-Übertragungsfunktion zu der MIOC-Übertragungsfunktion invers ist.

Die Frequenzantwort des eigentlichen MIOC 11 wirkt sich, wie oben beschrieben, auf die analoge Domäne aus, da sie die analoge Modulation im Faserkreisel betrifft. Das dem MIOC vorgeschaltete Digitalfilter 53 ist vor dem Digital/AnalogWandler 8 angeordnet und wirkt primär in der digitalen Domäne. Die Signalverarbeitung in der digitalen Domäne wird durch das Digitalfilter 53 beeinflusst, indem die zu der MIOC-Übertragungsfunktion umgekehrte Filter-Übertragungsfunktion in sie einfließt.

Ferner weist das faseroptische Sagnac-Interferometer 1 den Prozessor 56 auf, wobei der Prozessor 56 eine Funktion einer Einstelleinheit zum Einstellen von Koeffizienten der Filter-Übertragungsfunktion übernehmen kann und eine Funktion einer Koeffizienten-Berechnungseinheit zum Bereitstellen der Koeffizienten an die Einstelleinheit übernehmen kann. Die Koeffizienten sind mithilfe der Koeffizienten-Berechnungseinheit des Prozessors 56 gemäß den oben beschriebenen Prinzipien berechenbar.

In der Faserspule 4 verlaufende Lichtstrahlen und damit also die Faserspule 4 durchlaufende Signale liegen in der analogen Domäne vor. Um eine adäquate Signalverarbeitung für die gewünschte Phasenmodulation in der Faserspule 4 durchzuführen, wird die Signalverarbeitung in der Auswerteschaltung 9 in der digitalen Domäne vorgenommen. Dementsprechend wird der Lichtausgang bzw. der Signalausgang der Faserspule 4 einem mit ADC (Analog/Digital Converter) bezeichneten Analog/Digital-Wandler 7 zugeführt. Der Faserspule 4 selbst wird dementsprechend der Signalausgang eines mit DAC (Digital Analog Converter) bezeichneten Digital/Analog-Wandlers 8 zugeführt.

Zwei aus der Lichtquelle 2 stammende, durch den Polarisator polarisierte und durch eine Strahlteilung erzeugte Lichtstrahlen sind in zueinander entgegengesetzten Richtungen in die Faserspule 4 einstrahlbar und anschließend wiedervereinigbar und die beiden Lichtstrahlen sind mittels eines Phasenmodulators modulierbar, der nicht abgebildet ist. Der Phasenmodulator kann z. B. im MIOC 11 angeordnet sein bzw. der MIOC 11 kann eine Funktion des Phasenmodulators übernehmen. Der Phasenmodulator vermag aufgrund eines entsprechenden an ihn bereitgestellten Rückstellsignals eine Phasenverschiebung der beiden in der Faserspule 4 verlaufenden Lichtstrahlen gegeneinander zu bewirken.

Dazu ist eine Photodetektoreinrichtung mit dem aus der Wiedervereinigung der Lichtstrahlen entstehenden Interferenzsignal beaufschlagbar, wobei durch die Photodetektoreinrichtung ein der Lichtintensität des Interferenzsignals entsprechendes Signal lieferbar ist, mit dem ein Verstärker mit dem nachgeschalteten Analog/Digital-Wandler 7 beaufschlagbar ist, dessen Ausgangssignale in der Auswerteschaltung verarbeitbar sind. Mithilfe eines Hauptregelkreises der Auswerteschaltung 9 ist dann ein digitales Phasenrückstellsignal erzeugbar und an den Digital/Analog-Wandler 8 zur Gewinnung des den Phasenmodulator beaufschlagenden Rückstellsignals lieferbar. Das Sagnac-Interferometer 1 weist einen Integrierten Optischen Multifunktions-Chip, MIOC auf, in dem die Phasenmodulation vollzogen wird und der demnach den Phasenmodulator aufweist.

Wie bereits beschrieben, ist dem Digital/Analog-Wandler 8 ein Digitalfilter 53 vorgeschaltet, das eine Filter-Übertragungsfunktion aufweist, die zu der MIOC-Übertragungsfunktion invers also mathematisch reziprok ist. Dazu wird die Filter-Übertragungsfunktion durch entsprechende Filter-Koeffizienten definiert. Diese Filter-Koeffizienten sind beispielsweise auf die oben dargelegten Weisen ermittelbar.

Die gesamte Auswerteschaltung 9, also auch die zugrunde liegende Elektronik bzw. Sensorik sowie der MIOC 11 arbeiten in durch einen Taktgeber vorgegebenen Takten. Gemäß dieser Takte vollziehen sich beispielsweise die Analog-DigitalWandlung der analogen Signale im Analog/Digital-Wandler 7, die gesamte digitale Signalverarbeitung in der Auswerteschaltung 9, dem MIOC 11 und die Digital-Analog-Wandlung der digitalen Signale zum Erhalten des Modulations- und Rückstellsignals im Digital/Analog-Wandler 8. Sind die Filter-Koeffizienten nicht festgelegt, sondern ständig korrigierbar oder anpassbar, so kann eine entsprechende Korrektur bzw. Anpassung für eine in einem bestimmten Takt wirksame Filter-Übertragungsfunktion auf der Grundlage von Signalen eines oder mehrerer vorangehender Takte erfolgen. Das demodulierte Signal kann beispielsweise über einen hinreichend langen Zeitabschnitt analysiert bzw. beobachtet werden, wobei etwa Filter-Koeffizienten eine noch nicht optimale Filter-Übertragungsfunktion definieren. Dieses demodulierte Signal ist eine Funktion der Abweichung der realen Filter-Übertragungsfunktion von der optimalen Filter-Funktion. Demnach wäre im Falle einer optimalen Filter-Übertragungsfunktion dieses demodulierte Signal Null. Anhand des beobachteten demodulierten Signals während des genannten Zeitabschnitts können die Filter-Koeffizienten angepasst werden, um für einen zukünftigen Zeitabschnitt die Filter-Übertragungsfunktion zu definieren, welche dann optimal an den MIOC-Frequenzgang angepasst ist.

Letzteres Prinzip wurde oben bereits dargelegt, beispielsweise unter Bezug auf eine Ausführungsform, nach welcher mithilfe der Koeffizienten-Berechnungseinheit des Prozessors 56 ein erstes und ein zweites Phasenmodulationssignal erzeugbar sind. Das erste Phasenmodulationssignal ist dabei aus dem Phasenrückstellsignal erzeugbar, wobei das Digitalfilter 53 und der MIOC 11 keine Auswirkung auf das Phasenrückstellsignal haben. Dies entspricht beispielsweise einem Ausschalten oder Umgehen des Digitalfilters 53 in einem entsprechenden Signalpfad. Das zweite Phasenmodulationssignal ist ebenfalls aus dem Phasenrückstellsignal erzeugbar, wobei das Digitalfilter 53 und der MIOC 11 eine Auswirkung auf das Phasenrückstellsignal haben. Dies entspricht also etwa einem Einschalten oder Zuschalten des Digitalfilters 53 in einem weiteren Signalpfad. Mithilfe der Koeffizienten-Berechnungseinheit des Prozessors 56 ist ein Phasenmodulations-Fehlersignal als Differenz zwischen dem ersten und dem zweiten Phasenmodulationssignal der beiden Signalpfade berechenbar. Die Koeffizienten der Filter-Übertragungsfunktion sind schließlich - ebenfalls durch die Koeffizienten-Berechnungseinheit des Prozessors 56 - aufgrund des Phasenmodulations-Fehlersignals berechenbar und können für folgende Takte wirksam zur Kompensation des MIOC-Frequenzgangs bzw. dessen Anteil an einem Lock-In-Effekt eingesetzt werden. Dies wird nun noch detaillierter gezeigt.

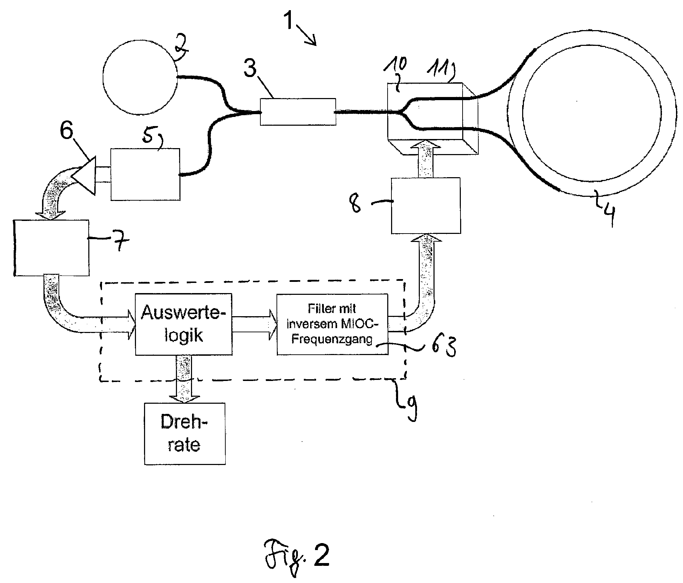

In Fig. 2 ist in skizzierter Form ein beispielhaftes faseroptisches Sagnac-Interferometer 1 gemäß der Erfindung dargestellt, das Übereinstimmungen mit dem in Fig. 1 gezeigten Interferometer aufweist. Insbesondere sind die Lichtquelle 2, der Polarisator (beispielsweise im Integrierten Optischen Multifunktions-Chip 11 integriert), der faseroptische Koppler 3, die Faserspule 4, die Photodetektoreinrichtung 5, der Verstärker 6 mit dem nachgeschalteten Analog/Digital-Wandler 7, der Digital/Analog-Wandler 8, die Auswerteschaltung 9 und der Phasenmodulator 10 des Integrierten Optischen Multifunktions-Chip (MIOC) 11 mit dem entsprechenden vorgeschalteten Digitalfilter 63 dargestellt. Das Digitalfilter 63 entspricht im Wesentlichen dem Digitalfilter 53 aus Fig. 1.

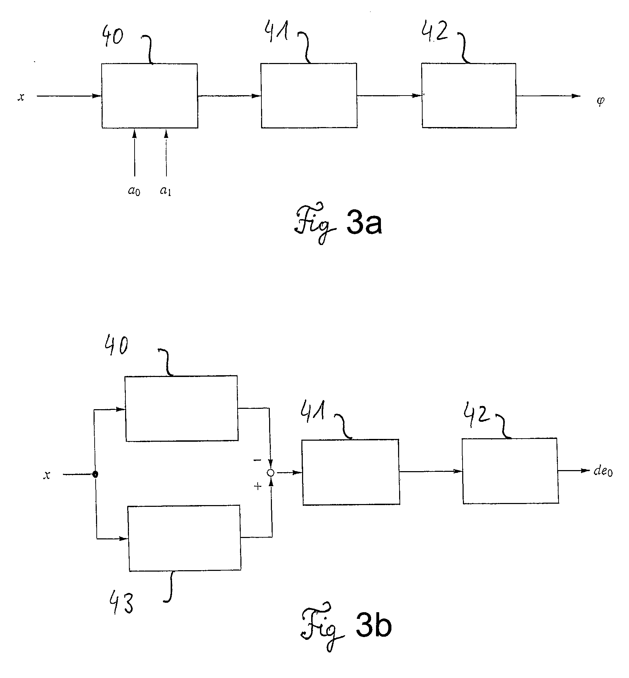

Anhand der Fig. 3A bis 3C wird beispielhaft gezeigt, wie die Filter-Koeffizienten des Digitalfilters 53, 63 ermittelbar sind, so dass die Filter-Übertragungsfunktion zur MIOC-Übertragungsfunktion reziprok ist. Man betrachte zunächst das Blockdiagramm in Fig. 3A. Wie bereits dargelegt, weist ein Integrierter Optischer Multifunktions-Chip MIOC aufgrund seiner spezifischen Materialeigenschaften, insbesondere einer Ladungsträgerbeweglichkeit darin, eine frequenzabhängige Übertragungsfunktion auf, die sich in guter Näherung folgendermaßen darstellen lässt:

$$H^*(z) = \frac{1 + a_1 z^{-1}}{1 + a_0 z^{-1}} \ (\text{Gleichung 1}),$$

wobei bei einer Abtastzeit T gilt $z = e^{j(t)T}$.

Diese Übertragungsfunktion führt zu einer Ausgabe von Sensorfehlern, also von einer Abweichung einer gemessenen oder genauer gesagt ermittelten Drehrate gegenüber einer tatsächlichen Drehrate. Insbesondere bei geringen Drehraten zeigen sich derartige Sensorfehler. Das in Fig. 3A dargestellte Filtermodell veranschaulicht die prinzipielle Wirkung des vorgeschlagenen Digitalfilters, der durch den Block 40 repräsentiert ist. Das Modell des Digitalfilters 40, das auch als Entzerrer bezeichnet werden kann, erhält ein Eingangssignal x sowie zwei Koeffizienten $a_0$ und $a_1$. Das Digitalfilter 40 weist eine Filter-Übertragungsfunktion $H(z, a_0, a_1)$ auf.

Block 41 stellt den MIOC bzw. dessen Wirkung dar, zu dessen Übertragungsfunktion die Filter-Übertragungsfunktion des Digitalfilters 40 reziprok ist. Die MIOC-Übertragungsfunktion ist demnach eine Funktion $H^*(z, a_0, a_1)$, die $H^{-1}(z, a_0, a_1)$ entspricht. Im anzustrebenden Idealfall entsprechen die Koeffizienten der Übertragungsfunktion des Digitalfilters 40 denen der MIOC-Übertragungsfunktion. Das durch das Digitalfilter 40 entzerrte Signal, das den MIOC durchläuft, wird auf einen Block 42 mit $1-z^{-1}$ gegeben, der das Sagnac-Interferometer simulierend eine Differenzbildung vornimmt und die effektive Phase $\varphi$ bereitstellt.

Um die Koeffizienten $a_0$ und $a_1$ für das Digitalfilter 40 zu ermitteln, so dass $H^*(z, a^*_0, a^*_1)$ und $H(z, a_0, a_1)$ reziprok zueinander sind, kann nun etwa folgendermaßen vorgegangen werden. Die Koeffizienten von $H^*$ sind zunächst meist unbekannt, sofern sie nicht bereits aufgrund von Erfahrungswerten oder auf Simulationen beruhend vorliegen. Zudem sind die Koeffizienten abhängig von der Umgebungstemperatur sowie der Zeit, so dass die Koeffizienten $a_i$ ständig auf die aktuellen Werte $a^*_i$ nachzuführen sind. Aus diesem Grund ist das Digitalfilter 40 adaptiv und kann stets neu ermittelte Koeffizienten in der Filter-Übertragungsfunktion anwenden.

Unter Betrachtung von Fig. 3B und der bereits gezeigten Blöcke 40, 41 und 42 seien hierfür zunächst folgende Betrachtungen nachvollzogen. Am Eingang x des Blockdiagramms wirkt neben dem Rückstellsignal und einem Dither- oder Zittersignal ein ständig wirksames Modulationssignal für die Phasenmodulierung. Die darauf zurückgehende "Aussteuerung" im Faserkreisel erzeugt im Fall einer Entzerrung bzw. Kompensation mithilfe des optimal eingestellten Digitalfilters eine erste Phasenmodulation $\varphi = \varphi_e$. Im nicht entzerrten Fall, also bei nicht optimaler Einstellung des Digitalfilters 40 erfolgt freilich eine andere Phasenmodulation $\varphi = \varphi_n$. Daraus ergibt sich im nicht entzerrten Fall ein Phasenfehler in Bezug auf den entzerren Fall, wobei sich der entsprechende Phasenfehler zu $e = \varphi_n - \varphi_e$ ergibt. Aus diesem Fehlersignal e sind etwa durch die oben beschriebene Koeffizienten-Berechnungseinheit die Koeffizienten $a_i$ genau bestimmbar bzw. auf den Idealwert nachführbar.

Mögliche Vorschriften für die Anpassung der Koeffizienten können etwa auf einer Berechnung des Fehlersignals e für inkrementelle Abweichungen der Koeffizienten in H(z) beruhen. Anders ausgedrückt wird das Fehlersignal e für die beiden nicht entzerrten Fälle $H(z, a_0+da_0, a_1)$ in Block 43 sowie analog dazu $H(z, a_0, a_1+da_1)$ (nicht dargestellt) berechnet.

Die Differenz der beiden Übertragungsfunktionen $H(z, a_0+da_0, a_1) - H(z, a_0, a_1)$ kann durch

$$da_0 \cdot \partial H(z, a_0, a_1) / da_0$$

ersetzt werden. Zusammen mit Gleichung 1 ergeben sich die partiellen Ableitungen zu

$$\frac{\partial H(z)}{\partial a_0} = \frac{z^{-1}}{1 + a_1 z^{-1}} \quad \text{bzw.} \quad \frac{\partial H(z)}{\partial a_1} = \frac{-z^{-1}(1 + a_0 z^{-1})}{(1 + a_1 z^{-1})^2}$$

Als Musterübertragungsfunktionen ergeben sich demnach

$$H_0(z) = \frac{\partial H(z)}{\partial a_0} \cdot H^{-1}(z) \cdot (1 - z^{-1}) = \frac{z^{-1}(1 - z^{-1})}{1 + a_0 z^{-1}} \quad \text{bzw.}$$

$$H_1(z) = \frac{\partial H(z)}{\partial a_1} \cdot H^{-1}(z) \cdot (1 - z^{-1}) = \frac{-z^{-1}(1 - z^{-1})}{1 + a_1 z^{-1}}$$

Unter Betrachtung von Fig. 3C wird nun eine Möglichkeit erläutert, die Koeffizienten wirksam zu bestimmen. Block 44 stellt die Übertragungsfunktion H(z) dar. Block 45 ist ein Modell des Kreiselpfads einschließlich der Demodulation und der Dither-Kompensation. Block 46 stellt $H_0(z)$ und Block 47 $H_1(z)$ dar. Die Musterübertragungsfunktionen $H_0(z)$ und $H_1(z)$ sollen nun mit dem Signal x gespeist werden, das die Modulation, die Phasenrückstellung und das Dithering widerspiegelt. Daraus ergeben sich Musterfunktionen, die bei einer Abweichung der Koeffizienten $a_0$ und $a_1$ von ihrem Idealwert als Fehlersignal zu erwarten sind. Damit können nun durch Korrelation des Fehlersignals e mit diesen beiden Musterfunktionen die Eingangsgrößen für zwei zusätzliche Hilfsregelkreise 48 und 49 zum Erstellen von $a_0$ bzw. $a_1$ erzeugt werden. Diese Hilfsregelkreise 48 und 49 können auch Bestandteil der Koeffizienten-Berechnungseinheit sein. Das Fehlersignal selbst kann beispielsweise bei einem Faserkreisel gewonnen werden, indem das Detektorsignal abgegriffen wird, das demoduliert und vom beaufschlagten Dithersignal befreit wird. Es wurde nämlich festgestellt, dass hierbei das Fehlersignal e entsteht, so dass es auf einfache Weise erhalten werden kann. Folglich ergibt sich die in Fig. 3C wiedergegebene Struktur eines adaptiven Entzerrers bzw. eines Digitalfilters mit an einen MIOC-Frequenzgang angepassten Filter-Koeffizienten.

**Patentansprüche**

1. Drehratensensor mit einem faseroptischen Sagnac-Interferometer (1), wobei das faseroptische Sagnac-Interferometer (1) eine Lichtquelle (2), einen Polarisator, eine Faserspule (4), eine Photodetektoreinrichtung (5), einen Verstärker (6) mit einem nachgeschalteten Analog/Digital-Wandler (7), einen Digital/Analog-Wandler (8), eine Auswerteschaltung (9) und einen Phasenmodulator (10) aufweist, wobei
zwei aus der Lichtquelle (2) stammende, durch den Polarisator polarisierte und durch eine Strahlteilung erzeugte Lichtstrahlen in zueinander entgegengesetzten Richtungen in die Faserspule (4) einstrahlbar und anschließend wiedervereinigbar sind und die beiden Lichtstrahlen mittels des in der Faserspule (4) angeordneten Phasenmodulators (10) modulierbar sind,
die Photodetektoreinrichtung (5) mit dem aus der Wiedervereinigung der Lichtstrahlen entstehenden Interferenzsignal beaufschlagbar ist, wobei durch die Photodetektoreinrichtung (5) ein der Lichtintensität des Interferenzsignals entsprechendes Signal lieferbar ist, mit dem der Verstärker (6) mit dem nachgeschalteten Analog/Digital-Wandler (7) beaufschlagbar ist, dessen Ausgangssignale in der Auswerteschaltung (9) verarbeitbar sind,
mithilfe eines Hauptregelkreises der Auswerteschaltung (9) ein digitales Phasenrückstellsignal erzeugbar und an den Digital/Analog-Wandler (8) zur Gewinnung eines den Phasenmodulator (10) beaufschlagenden Rückstellsignals lieferbar ist, wobei der Hauptregelkreis einen Integrierten Optischen Multifunktions-Chip (MIOC) (11) mit einer MIOC-Übertragungsfunktion aufweist,
dem Integrierten Optischen Multifunktions-Chip (11) ein Digitalfilter (53) vorgeschaltet ist, dessen Filter-Übertragungsfunktion im Wesentlichen der inversen MIOC-Übertragungsfunktion entspricht, sodass die MIOC-Übertragungsfunktion durch die Filter-Übertragungsfunktion kompensierbar ist,
das faseroptische Sagnac-Interferometer (1) ferner eine Einstelleinheit zum Einstellen von Koeffizienten der Filter-Übertragungsfunktion aufweist,
**dadurch gekennzeichnet, dass** das faseroptische Sagnac-Interferometer eine Koeffizienten-Berechnungseinheit zum Bereitstellen der Koeffizienten an die Einstelleinheit aufweist, und dass mithilfe der Koeffizienten-Berechnungseinheit ein erstes Phasenmodulationssignal aus dem Phasenrückstellsignal erzeugbar ist, wobei das Digitalfilter (53) und der Integrierte Optische Multifunktions-Chip (11) keine Auswirkung auf das Phasenrückstellsignal haben,

ein zweites Phasenmodulationssignal aus dem Phasenrückstellsignal erzeugbar ist, wobei das Digitalfilter (53) und der Integrierte Optische Multifunktions-Chip (11) eine Auswirkung auf das Phasenrückstellsignal haben,
ein Phasenmodulations-Fehlersignal als Differenz zwischen dem ersten und dem zweiten Phasenmodulationssignal berechenbar ist, und
die Koeffizienten der Filter-Übertragungsfunktion aufgrund des Phasenmodulations-Fehlersignals berechenbar sind.

2. Drehratensensor nach Anspruch 1, **dadurch gekennzeichnet, dass** die Koeffizienten durch die Koeffizienten-Berechnungseinheit auf der Grundlage von Ausgangssignalen des Integrierten Optischen Multifunktions-Chips berechenbar sind.

3. Drehratensensor nach Anspruch 1, **dadurch gekennzeichnet, dass** in der Koeffizienten-Berechnungseinheit die Koeffizienten der Filter-Übertragungsfunktion als zuvor festgelegte Werte vorliegen.

4. Drehratensensor nach Anspruch 1, **dadurch gekennzeichnet, dass** mithilfe der Koeffizienten-Berechnungseinheit die Koeffizienten der Filter-Übertragungsfunktion auf der Grundlage von MIOC-Koeffizienten des Integrierten Optischen Multifunktions-Chips (11), welche sich im Rückstellsignal widerspiegeln, berechenbar sind.

5. Drehratensensor nach Anspruch 3 oder 4, **dadurch gekennzeichnet, dass** mithilfe der Koeffizienten-Berechnungseinheit die Koeffizienten der Filter-Übertragungsfunktion aufgrund des demodulierten Signals, das als Eingang des Hauptregelkreises dient und aus dem dieser das Rückstellsignal berechnet, berechenbar sind.

6. Verfahren zum Steuern eines Drehratensensors mit einem faseroptischen Sagnac-Interferometer (1), wobei das faseroptische Sagnac-Interferometer (1) eine Lichtquelle (2), einen Polarisator, eine Faserspule (4), eine Photodetektoreinrichtung (5), einen Verstärker (6) mit einem nachgeschalteten Analog/Digital-Wandler (7), einen Digital/Analog-Wandler (8), eine Auswerteschaltung (9) und einen Phasenmodulator (10) aufweist, und wobei
zwei aus der Lichtquelle (2) stammende, durch den Polarisator polarisierte und durch eine Strahlteilung erzeugte Lichtstrahlen in zueinander entgegengesetzten Richtungen in die Faserspule (4) eingestrahlt und anschließend wiedervereinigt werden,
und wobei die Photodetektoreinrichtung (5) mit dem aus der Wiedervereinigung der Lichtstrahlen entstehenden Interferenzsignal nach Durchlauf durch den Polarisator beaufschlagt wird, wobei durch die Photodetektoreinrichtung (5) ein der Lichtintensität des Interferenzsignals entsprechendes Signal geliefert wird, mit dem der Verstärker (6) mit dem nachgeschalteten Analog/Digital-Wandler (7) beaufschlagt wird, dessen Ausgangssignale in der Auswerteschaltung (9) verarbeitet werden, und wobei
mithilfe eines Hauptregelkreises der Auswerteschaltung (9) ein digitales Phasenrückstellsignal erzeugt und an den Digital/Analog-Wandler (8) zur Gewinnung eines den Phasenmodulator (10) beaufschlagenden Rückstellsignals geliefert wird, wobei der Phasenmodulator in einen Integrierten Optischen Multifunktions-Chip (11) realisiert ist, mit einer MIOC-Übertragungsfunktion,
mit den Schritten:

Vorschalten eines Digitalfilters (53) vor den Integrierten Optischen Multifunktions-Chip (11), wobei die Filter-Übertragungsfunktion des Digitalfilters (53) im Wesentlichen der inversen MIOC-Übertragungsfunktion entspricht,
Kompensieren der MIOC-Übertragungsfunktion durch die Filter-Übertragungsfunktion des Digitalfilters (53),
**gekennzeichnet durch** die folgenden Schritte:

Deaktivieren oder Umgehen des Digitalfilters (53) und des Integrierten Optischen Multifunktions-Chips (11) und Erzeugen eines ersten Phasenmodulationssignals auf Grundlage des Phasenrückstellsignals,
Aktivieren oder Einbeziehen des Digitalfilters (53) und des Integrierten Optischen Multifunktions-Chips (11) und Erzeugen eines zweiten Phasenmodulationssignals auf Grundlage des Phasenrückstellsignals,
Errechnen eines Phasenmodulations-Fehlersignals als Differenz zwischen dem ersten und dem zweiten Phasenmodulationssignal,
Bestimmen von Koeffizienten der Filter-Übertragungsfunktion des Digitalfilters (53) auf Grundlage des Phasenmodulations-Fehlersignals, und
Einstellen der bestimmten Koeffizienten der Filter-Übertragungsfunktion.

**Claims**

1. Rotation rate sensor with a fiber-optic Sagnac interferometer (1), wherein the fiber-optic Sagnac interferometer (1) comprises a light source (2), a polarizer, a fiber coil (4), a photo detector device (5), an amplifier (6) with a downstream connected analog/digital converter (7), a digital/analog converter (8), an evaluation circuit (9), and a phase modulator (10), wherein

   two light beams coming from the light source (2), being polarized by the polarizer and generated by a beam splitting are injectable in the fiber coil (4) in directions opposite to each other and are subsequently recombinable and wherein the two light beams can be modulated by the phase modulator (10) arranged in the fiber coil (4),

   the photo detector device (5) is exposable to the interference signal generated by the recombination of the light beams, wherein a signal corresponding to the light intensity of the interference signal is deliverable by the photo detector device (5), which is to be fed to the amplifier (6) with the downstream connected analog/digital converter (7), whose output signals are processable by the evaluation circuit (9),

   by means of a main control loop of the evaluation circuit (9) a digital phase reset signal is producible and deliverable to the digital/analog converter (8) for production of a reset signal to be fed to the phase modulator (10), wherein the main control loop comprises a multi-functional integrated optical chip (MIOC) (11) with a MIOC transfer function,

   a digital filter (53) is connected upstream to the multi-functional integrated optical chip (11), whose filter transfer function corresponds basically to the inverse MIOC transfer function such that the MIOC transfer function is compensatable by the filter transfer function.

   the fiber-optic Sagnac interferometer (1) further comprises an adjustment unit for adjusting of coefficients of the filter transfer function,

   **characterized in that** the fiber-optic Sagnac interferometer comprises a coefficient calculation unit for providing the coefficients to the adjustment unit, and that by means of the coefficient calculation unit a first phase modulation signal is producible from the phase reset signal, wherein the digital filter (53) and the multi-functional integrated optical chip (11) have no impact on the phase reset signal,

   a second phase modulation signal is producible from the phase reset signal, wherein the digital filter (53) and the multi-functional integrated optical chip (11) have an impact on the phase reset signal,

   a phase modulation error signal is calculatable as difference between the first and the second phase modulation signals, and

   the coefficients of the filter transfer function are calculatable based on the phase modulation error signal.

2. Rotation rate sensor according to claim 1, **characterized in that** the coefficients are calculatable by the coefficient calculation unit based on output signals of the multi-functional integrated optical chip.

3. Rotation rate sensor according to claim 1, **characterized in that** the coefficients of the filter transfer function are present in the coefficient calculation unit as predetermined values.

4. Rotation rate sensor according to claim 1, **characterized in that** the coefficients of the filter transfer function are calculatable by means of the coefficient calculation unit based on the MIOC coefficients of the multi-functional integrated optical chip (11) which are reflected in the reset signal.

5. Rotation rate sensor according to claim 3 or 4, **characterized in that** the coefficients of the filter transfer function are calculatable by means of the coefficient calculation unit based on the demodulated signal, which serves as input of the main controller and from which the main controller calculates the reset signal.

6. Method for controlling a rotation rate sensor with a fiber-optic Sagnac interferometer (1), wherein the fiber-optic Sagnac interferometer (1) comprises a light source (2), a polarizer, a fiber coil (4), a photo detector device (5), an amplifier (6) with a downstream connected analog/digital converter (7), a digital/analog converter (8), an evaluation circuit (9), and a phase modulator (10), and wherein

   two light beams coming from the light source (2), being polarized by the polarizer and generated by a beam splitting are injected in the fiber coil (4) in directions opposite to each other and are subsequently recombined,

   and wherein the photo detector device (5) is exposed to the interference signal generated by recombining the light beams after its passage through the polarizer, wherein a signal corresponding to the light intensity of the interference signal is delivered by the photo detector device (5), which is fed to the amplifier (6) with the downstream connected analog/digital converter (7), whose output signals are processed in the evaluation circuit (9), and wherein

   by means of a main control loop of the evaluation circuit (9) a digital phase reset signal is produced and supplied to the digital/analog converter (8) for production of a reset signal to be fed to the phase modulator (10), wherein the phase modulator is realized within a multi-functional integrated optical chip (11) with a MIOC transfer function,

comprising the steps:

connecting upstream to the multi-functional integrated optical chip (11) a digital filter (53), wherein the filter transfer function of the digital filter (53) corresponds basically to the inverse MIOC transfer function;
compensating the MIOC transfer function by the filter transfer function of the digital filter (53),
**characterized by** the following steps:

deactivating or avoiding of the digital filter (53) and the multi-functional integrated optical chip (11) and generating a first phase modulation signal based on the phase reset signal,
activating or involving the digital filter (53) and the multi-functional integrated optical chip (11) and generating a second phase modulation signal based on the phase reset signal,
calculating a phase modulation error signal as difference between the first and the second phase modulation signals,
determining coefficients of the filter transfer function of the digital filter (53) based on the phase modulation error signal, and
adjusting the determined coefficients of the filter transfer function.


**Revendications**

1. Capteur de vitesse de rotation avec un interféromètre de Sagnac à fibre optique (1), étant précisé que l'interféromètre de Sagnac à fibre optique (1) comporte une source de lumière (2), un polarisateur, une bobine de fibre (4), un dispositif photodétecteur (5), un amplificateur (6) pourvu d'un convertisseur analogique/ numérique (7) monté en aval, un convertisseur numérique/ analogique (8), un circuit d'analyse (9) et un modulateur de phase (10), étant précisé

que deux rayons lumineux provenant de la source de lumière (2), polarisés par le polarisateur et produits par une séparation de rayons sont aptes à être introduits dans la bobine de fibre (4) dans des directions opposées et à être ensuite réunis, et que les deux rayons lumineux sont aptes à être modulés à l'aide du modulateur de phase (10) disposé dans la bobine de fibre (4),

que le dispositif photodétecteur (5) est apte à être sollicité avec le signal d'interférence résultant de la réunion des rayons lumineux, étant précisé que grâce au dispositif photodétecteur (5) peut être fourni un signal qui correspond à l'intensité lumineuse du signal d'interférence et avec lequel peut être sollicité l'amplificateur (6), pourvu du convertisseur analogique/ numérique (7) monté en aval, dont les signaux de sortie sont aptes à être traités dans le circuit d'analyse (9),

qu'à l'aide d'un circuit régulateur principal du circuit d'analyse (9), un signal numérique de réinitialisation de phase peut être généré et être fourni au convertisseur numérique/analogique (8) pour obtenir un signal de réinitialisation qui sollicite le modulateur de phase (10), étant précisé que le circuit régulateur principal comporte une puce optique intégrée multifonction (MIOC) (11) avec une fonction de transmission MIOC,

qu'en amont de la puce optique intégrée multifonction (11) est monté un filtre numérique (53) dont la fonction de transmission de filtre correspond dans l'ensemble à la fonction de transmission MIOC inverse, de sorte que la fonction de transmission MIOC est apte à être compensée par la fonction de transmission de filtre,

que l'interféromètre de Sagnac à fibre optique (1) comporte également une unité de réglage pour régler des coefficients de la fonction de transmission de filtre,

**caractérisé en ce que** l'interféromètre de Sagnac à fibre optique comporte une unité de calcul de coefficients pour fournir les coefficients à l'unité de réglage, et **en ce qu'**à l'aide de l'unité de calcul de coefficients, un premier signal de modulation de phase peut être généré à partir du signal de réinitialisation de phase, étant précisé que le filtre numérique (53) et la puce optique intégrée multifonction (MIOC) (11) n'ont aucun effet sur le signal de réinitialisation de phase,

un deuxième signal de modulation de phase peut être généré à partir du signal de réinitialisation de phase, étant précisé que le filtre numérique (53) et la puce optique intégrée multifonction (MIOC) (11) ont un effet sur le signal de réinitialisation de phase,

un signal d'erreur de modulation de phase peut être calculé comme différence entre les premier et deuxième signaux de modulation de phase, et

les coefficients de la fonction de transmission de filtre peuvent être calculés sur la base du signal d'erreur de modulation de phase.

2. Capteur de vitesse de rotation selon la revendication 1, **caractérisé en ce que** les coefficients peuvent être calculés par l'unité de calcul de coefficients sur la base de signaux de sortie de la puce optique intégrée multifonction.

**3.** Capteur de vitesse de rotation selon la revendication 1, **caractérisé en ce que** dans l'unité de calcul de coefficients, les coefficients de la fonction de transmission de filtre sont présents sous la forme de valeurs fixées au préalable.

**4.** Capteur de vitesse de rotation selon la revendication 1, **caractérisé en ce qu'**à l'aide de l'unité de calcul de coefficients, les coefficients de la fonction de transmission de filtre peuvent être calculés sur la base de coefficients MIOC de la puce optique intégrée multifonction (11) qui sont perceptibles dans le signal de réinitialisation.

**5.** Capteur de vitesse de rotation selon la revendication 3 ou 4, **caractérisé en ce qu'**à l'aide de l'unité de calcul de coefficients, les coefficients de la fonction de transmission de filtre peuvent être calculés à partir du signal démodulé qui sert d'entrée du circuit régulateur principal et à partir duquel ce dernier calcule le signal de réinitialisation.

**6.** Procédé pour commander un capteur de vitesse de rotation avec un interféromètre de Sagnac à fibre optique (1), étant précisé que l'interféromètre de Sagnac à fibre optique (1) comporte une source de lumière (2), un polarisateur, une bobine de fibre (4), un dispositif photodétecteur (5), un amplificateur (6) pourvu d'un convertisseur analogique/numérique (7) monté en aval, un convertisseur numérique/analogique (8), un circuit d'analyse (9) et un modulateur de phase (10), et que

deux rayons lumineux provenant de la source de lumière (2), polarisés par le polarisateur et produits par une séparation de rayons sont introduits dans la bobine de fibre (4) dans des directions opposées et sont ensuite réunis, et que le dispositif photodétecteur (5) est apte à être sollicité avec le signal d'interférence résultant de la réunion des rayons lumineux, après la traversée du polarisateur, étant précisé que grâce au dispositif photodétecteur (5) est fourni un signal qui correspond à l'intensité lumineuse du signal d'interférence et avec lequel est sollicité l'amplificateur (6), pourvu du convertisseur analogique/numérique (7) monté en aval, dont les signaux de sortie sont aptes à être traités dans le circuit d'analyse (9), et

qu'à l'aide d'un circuit régulateur principal du circuit d'analyse (9), un signal numérique de réinitialisation de phase est généré et est fourni au convertisseur numérique/analogique (8) pour obtenir un signal de réinitialisation qui sollicite le modulateur de phase (10), étant précisé que le modulateur de phase est réalisé dans une puce optique intégrée multifonction (11) avec une fonction de transmission MIOC,

avec les étapes :

de montage d'un filtre numérique (53) en amont de la puce optique intégrée multifonction (11), étant précisé que la fonction de transmission de filtre dudit filtre numérique (53) correspond dans l'ensemble à la fonction de transmission MIOC inverse,

de compensation de la fonction de transmission MIOC par la fonction de transmission de filtre du filtre numérique (53),

**caractérisé par** les étapes suivantes :

désactivation ou contournement du filtre numérique (53) et de la puce optique intégrée multifonction (11), et production d'un premier signal de modulation de phase sur la base du signal de réinitialisation de phase,

activation ou intégration du filtre numérique (53) et de la puce optique intégrée multifonction (11), et production d'un deuxième signal de modulation de phase sur la base du signal de réinitialisation de phase,

calcul d'un signal d'erreur de modulation de phase, comme différence entre les premier et deuxième signaux de modulation de phase,

définition de coefficients de la fonction de transmission de filtre du filtre numérique (53) sur la base du signal d'erreur de modulation de phase, et

réglage des coefficients définis de la fonction de transmission de filtre.

Fig. 1

Fig. 2

Fig 3a

Fig 3b

Fig 3c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2013044328 A1

- US 2009201510 A1